# EUROPEAN PATENT SPECIFICATION

(11) **EP 3 919 812 B1**
(45) Date of publication and mention of the grant of the patent: **05.11.2025**
(21) Application number: 21155813.5
(22) Date of filing: 08.02.2021
(51) Int. Cl.: F21V 21/30, F21V 29/76, F16C 11/00, F21V 21/29, F21Y 105/16, F21Y 115/10

(54) **BALL JOINT**
KUGELGELENK
JOINT SPHÉRIQUE

(30) Priority: 06.06.2020 CN 202021027848 U
(43) Date of publication of application: 08.12.2021
(73) Proprietor: Luceco UK Limited, London W1U 6LN (GB)
(72) Inventor: Stuart-Walker, Robert, Telford, Shropshire TF3 3BD (GB)
(74) Representative: Marks & Clerk LLP

(56) References cited:
- CN-A- 104 676 359
- KR-A- 20100 026 765
- KR-A- 20200 003 995
- KR-B1- 100 856 725
- US-B1- 7 695 170

## Description

### Technical field

The present invention relates to a floodlight that is directionally adjustable.

### Background

Floodlights are lamps whose illuminance on an illuminated surface is higher than that of the surrounding environment. They are also called spotlights. They are often used for the projection lighting of large-scale operation mines, building contours, stadiums, bridges, monuments, parks and flower beds.

A typical floodlight in the prior art is installed and fixed on a support base with a U-shaped bracket, and, can only be rotated around a single axis, typically a longitudinal axis, to adjust the angle of use (i.e. the angle/direction of illumination provided by the floodlight). Once an existing floodlight has been installed and fixed, a user cannot rotate the floodlight around multiple axis, and he must therefore often remove and reinstall the floodlight if he is not satisfied with the illumination angle of the installed floodlight. It is difficult for the user to adjust the angle of the floodlight according to their exact requirements.

KR20100026765A discloses a lighting apparatus to vary the direction of light of a lamp according to an installation position by installing the lap post using a joint ball.

### Summary of the invention

The scope of the invention is defined by the appended claims.

The invention seeks to provide a floodlight that can, once mounted, be more flexibly rotated to be securable in a greater range of different directions.

In order to solve the above-mentioned shortcomings in the prior art, the present disclosure relates to a floodlight that can be freely rotated so that the angle of the floodlight is adjustable in different directions.

In order to achieve the above technical effects, the present disclosure provides the following solutions:
According to an example useful for understanding the invention as defined by the claims, this disclosure relates to a steering structure for a floodlight. The steering structure comprises a steering head and a steering groove matching the steering head. The steering head has a spherical shape and is fixed to a support base of the floodlight. The steering groove is located on a rear surface of the floodlight. The steering groove has a hemispherical shape. The steering head is mounted and rotatable within the steering groove. The steering structure of the floodlight further comprises a fixing device for fixing the steering head in the steering groove.

The term "steering" may be used instead of the term "adjusting" as used herein. For example, the "adjusting structure" may also be described as a "steering structure". The term "adjusting head" is interchangeable with "steering head". The terms "adjusting groove" and "steering groove" are interchangeable and may also be replaced with the term "hemispherical adjustment cavity" as used herein. The terms "groove", "slot", and "cavity", as used herein, are interchangeable. The term "hemispherical" as used herein is not limited to "half a sphere", but may encompass a shape wherein at least a portion of the shape is spherical, or, a shape that comprises an incomplete sphere.

According to the invention, the fixing device comprises a pressing member (also known as a compression member) which presses (or is configured to press) the steering head into the steering groove, the pressing member having a restriction hole through the pressing member, the restriction hole having a flared shape (or bell mouth shape) and a side wall of the restriction hole having a curved surface matching the surface of the steering head, the curved surface being set tangentially to the steering groove, the side wall of the restriction hole encompassing the surface of the steering head.

Optionally, the pressing member is provided with a wrap around the surface of the side of the compression member that projects away from the steering groove, the wrap being provided around the restriction hole, an inner wall of the wrap matching the steering head and the inner wall of the wrap wrapping around the surface of the steering head. The wrap may be an extruded portion or ridge extending from the side of the compression member that projects away from the steering slot.

Optionally, the steering structure further comprises an adjusting mechanism for adjusting the tightness of the compression member, the adjusting mechanism comprising an end face of the steering groove set at an inclination, the steering groove is set protruding from the rear surface of the floodlight, the compression member having a fixed end and a steering end, the fixed end and the steering end are located at opposite ends of the compression member, the fixed end is fixed to the floodlight, the steering end is connected to the floodlight by means of a steering bolt. The end face of the steering groove may comprise a portion of the rear surface of the floodlight surrounding the steering groove. The end face of the steering groove may be set at an inclination relative to the pressing member. The steering groove may "protrude" from the rear surface of the floodlight in the sense that the steering groove is recessed into a member protruding from the rear surface of the floodlight. The tightness of the compression member may quantify the firmness of connection between the compression member and steering head. For example, increasing the tightness of the compression member may cause the compression member to be pressed into the steering head.

The steering head may be a thumb screw that is suitable for adjustment by a user's finger.

According to the invention, the compression member comprises an opening which extends from the outer side of the compression member towards the restriction hole and is connected to the restriction hole, the two ends of the opening being fixed to the floodlight respectively. According to the invention, the fixed end of the compression member comprises the opening.

Optionally, the side of the compression member facing towards the side of the floodlight is provided with an outer edge projecting around the restriction hole, the outer edge enclosing an inner diameter of the same size as the outer diameter of the steering groove, an inner wall of the outer edge being provided around an outer wall of the steering groove.

Optionally, the steering head comprises a first arc surface and a second arc surface set opposite each other, the arcs of the first arc surface and the second arc surface match, the first arc surface and the second arc surface are connected by a number of first tendons, a number of first tendons are evenly spaced apart, a number of second tendons are also evenly spaced apart between the first arc surface and the second arc surface, the second tendons are crossed with the first tendons, the outer surface of both the first tendons and the second tendons having a curvature matching the first and second curved surfaces, together forming a complete ball shape.

According to the invention, the support base for the floodlight comprises a mounting plate and a support arm, one end of the support arm being fixedly connected to the mounting plate and the other end being fixedly connected to the steering head.

Optionally, the support arm has a number of pits at the connection with the steering head.

The present invention as defined by the claims provides a mountable floodlight assembly comprising: a floodlight, preferably configured to emit light from a forward surface, and a support structure for supporting the floodlight. The support structure comprises a spherical adjustment head fixed to a support base via a support arm, and, a compression member. A hemispherical adjustment cavity is embedded in a rear surface of the floodlight, the hemispherical adjustment cavity configured to receive a first portion of the spherical adjustment head. The compression member comprises a fixed end fixedly attached directly to the rear surface of the floodlight and an adjusting end, opposite to the fixed end, attached to the rear surface of the floodlight at a separation distance to the rear surface via an adjustment bolt, the separation distance being variable by rotation or other adjustment of the adjustment bolt. The compression member further comprises a bell-mouth shaped hole completely penetrating the compression member and located in between the fixed and adjusting ends, the bell-mouth shaped hole having an inner hole surface configured to contact a second portion of the spherical adjustment head that is not received within the hemispherical adjustment cavity, the compression member further defining an opening extending from an outer edge of the compression member at the fixed end to the bell-mouth shaped hole, and the fixed end being fixedly attached directly to the rear surface of the floodlight at the two ends of the opening. The adjustment bolt is configured to adjust the separation distance between a first distance, where the spherical adjustment head is free to rotate in three dimensions within the hemispherical adjustment cavity when the compression member is in a loosened configuration, and, a second distance lower than the first distance, where the inner hole surface is frictionally pressed against the second portion of the spherical adjustment head to prevent rotation of the adjustment head within the hemispherical adjustment cavity when the compression member is in a tightened configuration.

Optionally, the bell-shaped hole comprises a forward diameter on a forward side of the compression member facing the rear surface of the floodlight body, and a rearward diameter on an opposing rear side of the compression member, wherein the forward diameter corresponds to an outer edge of the hemispherical adjustment cavity on the rear surface of the floodlight, and, wherein the rearward diameter is less than the forward diameter.

Optionally, a contact edge of the bell-shaped hole is in the form of an arc when the compression member is in the loosened configuration, and, when the compression is in the tightened configuration, the contact edge of the bell-shaped hole is deformed to be in the form of a parabola.

Optionally, the compression member further comprises a wrap placed around at least a portion of the circumference around the bell-shaped hole, the wrap located on, and extending rearward from, a rear surface of the compression member facing away from the rear surface of the floodlight, wherein the wrap comprises an inner wall conforming to a third portion of the spherical adjustment head projecting rearward of the bell-shaped hole and providing additional frictional contact between the spherical adjustment head and the compression member when the compression element is in the tightened configuration.

Optionally, the rear surface of the floodlight housing comprises a heat sink structure, the heat sink structure comprising a plurality of heat dissipation fins, and, wherein the heat sink structure further comprises a protrusion within which the hemispherical adjustment cavity is formed.

There is also presented, to help understand the invention as defined by the claims, a method for adjusting a mountable floodlight assembly. The method comprises the steps of rotating the adjustment bolt to increase the separation distance to the second distance, rotating the floodlight about the spherical adjustment head in three dimensions, rotating the adjustment bolt to decrease the separation distance to the first distance thereby fixing the floodlight in a directional position.

According to an example useful for understanding the invention as defined by the claims, this disclosure also relates to a Floodlighting Luminaire (also known as a projection lamp), which includes a Floodlighting Luminaire body and a support base for supporting the Floodlighting Luminaire body. The Floodlighting Luminaire body includes a housing. The housing is sequentially provided with an LED light source plate assembly, a reflector, a glass plate and a buckle from the inside to the outside. On the face cover at the port of the shell, the back of the shell is connected with the support base through a universal steering structure.

Optionally, the universal steering structure includes a steering head and a steering groove matched with the steering head. The shape of the steering head is spherical. The steering head is fixed on the support seat. The steering groove is located on the back of the floodlight. The shape of the steering groove is hemispherical, the steering head is installed in the steering groove to rotate, and the universal steering structure includes a fixing device for fixing the steering head in the steering groove.

According to the invention, the fixing device includes a pressing member that presses the ball head into the steering groove, and the pressing member has a limiting hole penetrating the pressing member. The limiting hole is shaped like a bell mouth. The side wall of the position hole is an arc surface matching the surface of the steering head, and the arc surface is arranged tangentially to the steering groove. The side wall of the limiting hole covers the surface of the steering head.

Optionally, the universal steering structure further includes an adjusting mechanism for adjusting the tightness of the pressing member. The adjusting mechanism includes an end surface of the steering groove arranged obliquely with respect to the pressing member. The steering groove is protrudingly provided on the back of the projector body, and the pressing member has a fixed end. The fixed end and the adjusting end are respectively located at the opposite ends of the pressing member. The fixed end is fixed on the projector body. The adjusting end is connected to the projector body through the adjusting bolt, and the tilt direction of the end face of the steering groove is inclined towards the adjustment end.

Optionally, a limiting structure is provided in the housing to prevent the reflector from moving back and forth, left and right.

Optionally, the limiting structure includes supporting ribs on the inner wall of the housing. The supporting ribs are arranged protruding upward. The inner walls of the housing are all provided with supporting ribs, and the upper end of the reflector is formed by extending outwards. The supporting edge bears against the upper end of the supporting rib, and the four peripheral edges of the supporting edge protrude downwardly with clamping edges corresponding to the supporting ribs, and the clamping edges are located outside the supporting ribs and are attached to the supporting ribs.

Optionally, a glue groove is located on the inner wall of the housing and is arranged around the housing. The opening of the glue groove is arranged upward and the glue groove is located between the supporting ribs and the inner wall of the glue groove. The height of the side wall of the glue groove is not higher than the reflector cup.

Optionally, a number of prism structures are provided on the glass plate.

Optionally, the floodlighting luminaire further includes an infrared sensor component.

In a preferred technical solution, a plurality of heat dissipation fins are arranged on the back of the housing, and the heat dissipation fins are optionally uniformly distributed longitudinally in a stripe shape.

According to a further example that is useful for understanding the invention as defined by the claims, there is provided a projection lamp, comprising a projection lamp body and a support base for supporting the projection lamp body. The projection lamp body includes a housing. The housing is sequentially provided with an LED light source plate assembly and a reflector cup from the inside to the outside. A glass plate and a face cover buckled at the port of the shell, and the back of the shell is connected with the support base through a universal steering structure.

Optionally, the universal steering structure includes a steering head and a steering groove matching the steering head. The shape of the steering head is spherical. The steering head is fixed on the support seat. The steering groove is located on the back of the projection lamp body. The shape of the steering groove is hemispherical, and the steering head is installed in the steering groove to rotate. The universal steering structure also includes a fixing device for fixing the steering head in the steering groove.

Optionally, the fixing device comprises a pressing member, the pressing member presses the steering head into the steering groove, and the pressing member has a limiting hole penetrating the pressing member. The shape of the limit hole is a bell mouth shape, and the side wall of the limit hole is an arc surface matching the surface of the steering head. The arc surface is arranged tangentially to the steering groove, and the side wall of the limit hole covers the steering head surface.

Optionally, the universal steering structure further comprises an adjustment mechanism for adjusting the tightness of the pressing member. The adjustment mechanism includes an end surface of a turning groove arranged obliquely, and the turning groove is protrudingly arranged on the lamp body. On the back of the lamp body, the pressing part is provided with a fixed end and an adjusting end. The fixed end and the adjusting end are respectively located at opposite ends of the pressing part. The fixed end is fixed on the projector body, and the adjusting end is connected to the projector through an adjusting bolt. An end surface of the turning groove is inclined from the end of the presuming member corresponding to the fixed end to the end of the pressing member corresponding to the adjusting end.

Optionally, the housing is provided with a limiting structure that prevents the reflector from moving back and forth, left and right.

Optionally, the limiting structure comprises support ribs on the inner wall of the housing. The support ribs are upwardly convex. The upper end of the reflector cup extends outward to form a supporting edge. The supporting edge bears against an upper end of the supporting ribs. The four peripheral edges of the supporting edge protrude downwards with corresponding clamping edges corresponding to the supporting ribs.

Optionally, the inner wall of the housing is arranged around the housing, the opening of the glue groove is arranged upward, and the glue groove is located between the supporting rib and the inner wall of the glue groove. The height of the side wall of the glue groove is not higher than the height of the upper end of the reflector cup.

Optionally, a number of prism structures are provided on the glass plate.

Optionally, the projection lamp further comprises an infrared sensor component.

Optionally, a plurality of heat dissipation fins are provided on the back of the housing, and the heat dissipation fins are uniformly distributed longitudinally in a stripe shape.

Any of the features of any of the aspects discussed above can be combined with any of the other discussed aspects.

The devices according to the aspects discussed above are simple in structure and convenient to use. Through the rotation of the universal adjusting structure, the adjustment direction of the projection lamp/floodlight is not limited to a single longitudinal axis. Once installed, a user is able to freely rotate the floodlight in three dimensions and using a single degree of freedom.

### Description of the drawings

The invention will now be described, by way of example only, with reference to the accompanying drawings, in which:
Figure 1 is a schematic diagram of a device incorporating an adjusting/steering structure according to this disclosure;
Figure 2 is an enlarged schematic diagram of portion A of Figure 1;
Figure 3 is a schematic diagram of a deconstruction of the device of Figure 1;
Figure 4 is a schematic diagram of the structure of Figure 1 from a rearwards viewpoint;
Figure 5 is a lateral cross-sectional side-view of the device of Figure 1;
Figure 6 is an enlarged schematic diagram of portion C from Figure 5;
Figure 7 is a schematic diagram of an adjustment mechanism of the device of Figure 1;
Figure 8 is a schematic diagram of the structure of the adjusting head of the device of Figure 1;
Figure 9 is a rear isometric view of a pressing member/compression member of the device of Figure 1;
Figure 10 is a front isometric view of the pressing member of the device of Figure 1;
Figure 11 is a front isometric view of a mountable floodlight assembly;
Figure 12 is a deconstructed front isometric view of the mountable floodlight assembly of Figure 11;
Figure 13 is a deconstructed rear isometric view of the mountable floodlight assembly of Figure 11;
Figure 14 is a rear isometric view of a front panel of the mountable floodlight assembly of Figure 11;
Figure 15 is an enlarged view of section A of Figure 14;
Figure 16 is an isometric view of a reflector cup of the mountable floodlight assembly of Figure 11;
Figure 17 is a cross-sectional side view of the mountable floodlight assembly of Figure 11;

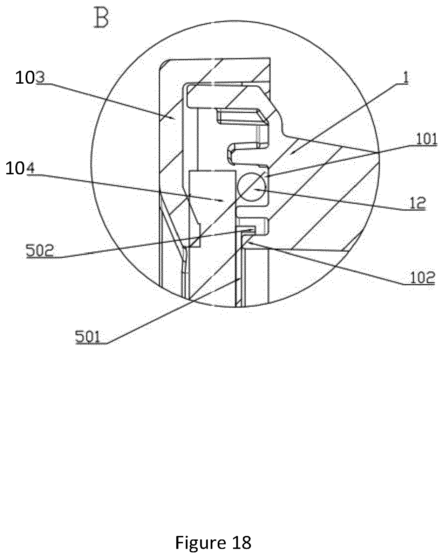

Figure 18 is an enlarged view of section B of Figure 17; and
Figure 19 is a front view of the mountable floodlight assembly of Figure 11.

### Detailed Description

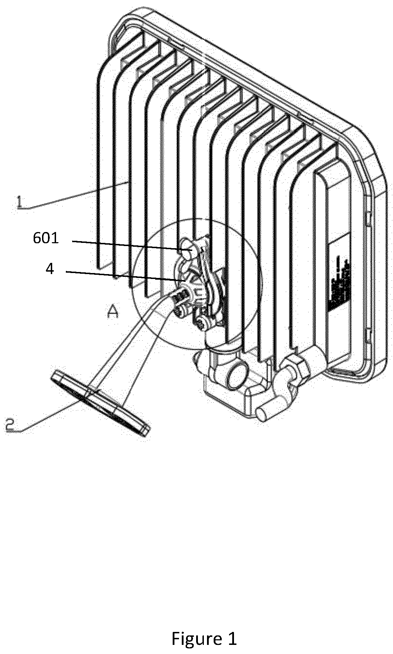

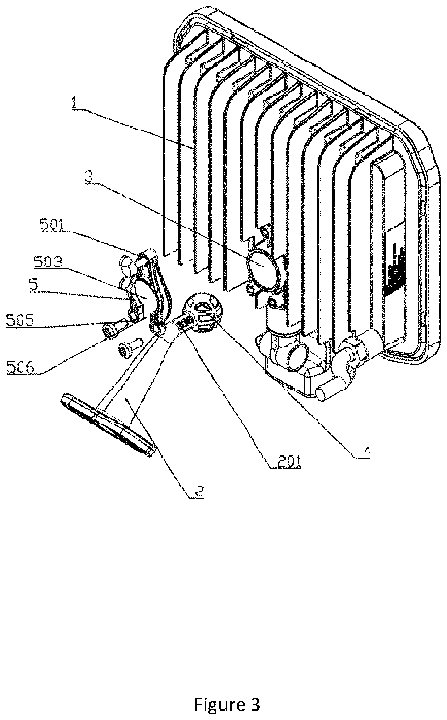

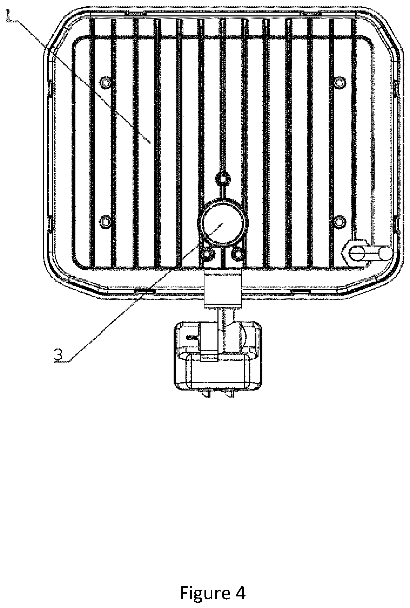

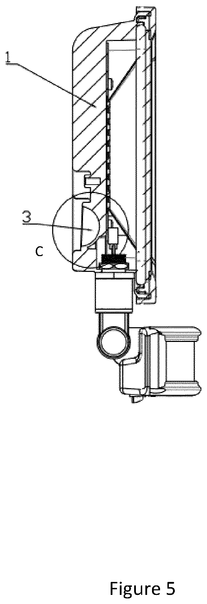

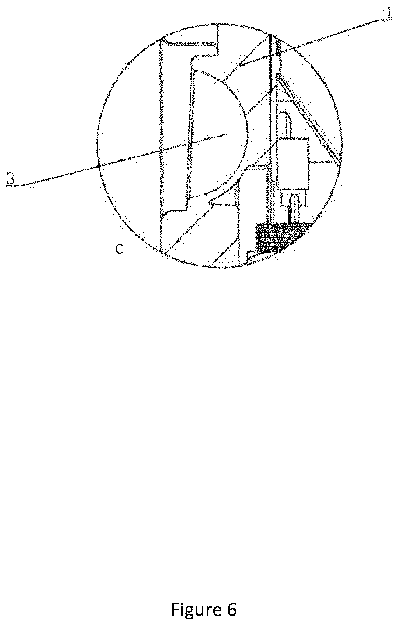

According to a first embodiment, and with reference to Figures 1 to 6, an adjusting structure (or steering structure) comprises an adjusting (or steering) head 4 having a spherical shape. The adjusting head 4 is fixed to a support base 2 of a spotlight 1 (also referred to herein as a floodlight, lamp, floodlight luminaire, or projection lamp). An adjusting slot 3 (also referred to herein as a adjusting groove or adjustment cavity, see particularly Figures 3 to 6) is located at the back of the spotlight 1. The shape of the adjusting slot 3 is hemispherical, i.e., the adjusting slot 3 has a spherical curved surface. The diameter of the port of the steering slot 3 is the same as the diameter of the steering head 4. The steering head 4 is mounted and rotated in the steering slot 3. The steering structure of the spotlight also includes a fixing device 5 (also described herein as a fixing means) for fixing the steering head 4 in the steering slot 3.

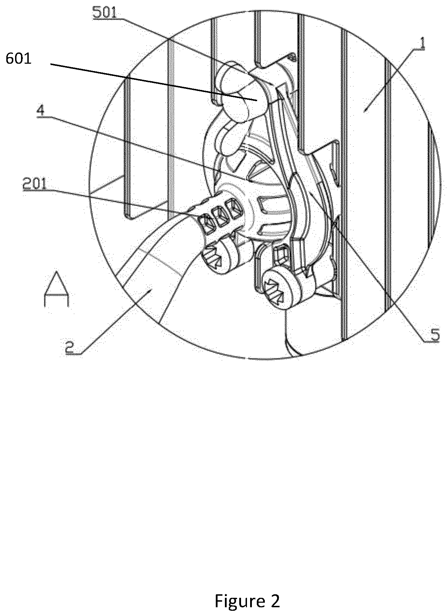

With particular further reference to Figures 2, 3, 9, and 10, a preferred technical solution is that the fixing means comprises a pressing member 5 (also referred to herein as a compression member) which presses the steering head 4 into the adjusting groove 3. The pressing member 5 has a restriction hole 503 (also referred to herein as a limit hole or bell-mouth shaped hole) running through the pressing member 5. The restriction hole 503 has a flared (or "bell mouth") shape. The diameter of the end of the restriction hole 503 near the steering groove 3 preferably being the same as the diameter of the steering head 4. The diameter of the end of the restriction hole 503 away from the steering groove 3 is preferably smaller than the diameter of the steering head 4. The side wall of the limit hole 503 is in the form of an arc matching the surface of the steering head 4. The arc is set tangentially to the steering groove 3 and forms a complete spherical surface with the spherical arc of the steering groove 10. The side wall of the limit hole 503 wraps around the surface of the steering head 4 and presses the steering head 4 into the steering groove 3 by means of the pressing member 5.

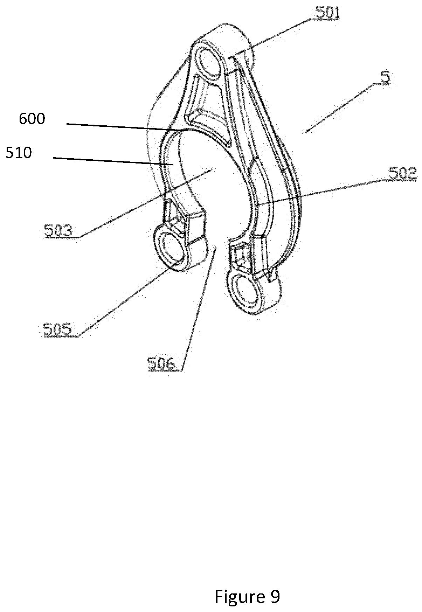

With reference to Figure 9, in a preferred technical solution, the surface of the side of the pressing member 5 that is facing away from the steering groove 3 is provided with a wrap 502. The wrap 502 is provided around the limit hole 503. The inner wall of the wrap 502 matches the steering head 4 and the inner wall of the wrap 502 wraps around the surface of the steering head 4. Due to the wrap 502, the contact area between the steering head 4 and the compression member 5 is be increased. This improves the ability of the compression member 5 to better confine the steering head 4 in the steering groove 3. Furthermore, there is increased friction between the steering head 4 and the compression member 5 to further reduce free rotation of the steering head 4 after when the steering head is pressed by the pressing member.

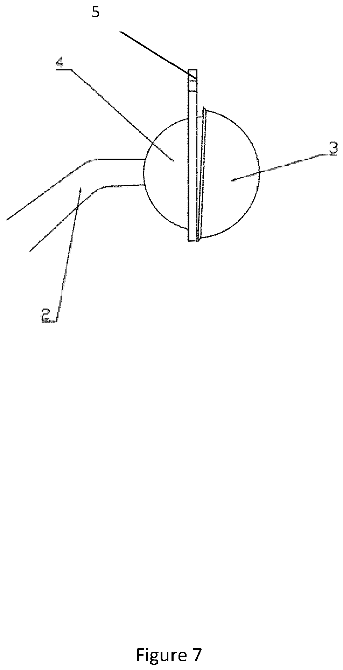

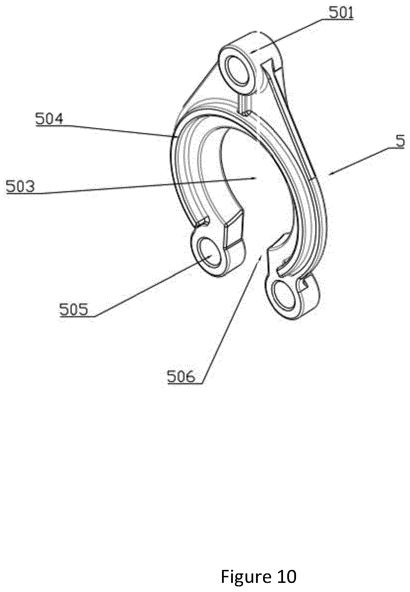

In a preferred technical solution, the adjusting structure of the spotlight 1 also includes an adjusting mechanism for adjusting the tightness of the compression member. The adjusting mechanism includes an end face of the steering groove 3 set at an inclination with respect to the compression member 5, which is visible in Fig. 7. The steering groove 3 is set at the back (i.e. rear surface) of the spotlight 1. The compression member 5 has a fixed end 505 and an adjusting end 501 (see, in particular, Figures 9 and 10). The fixed end 505 and the adjusting end 501 are located at opposite ends of the compression member 5. The fixed end 505 is fixed to the spotlight 1 and the adjusting end 501 is connected to the spotlight 1 by means of an adjusting bolt 601 (see also Fig. 3). There is an inclination of the end face of the steering groove 3, from the end corresponding to the fixing end 505, towards the end corresponding to the adjusting end 501 (see, in particular, Figure 7). With this technical solution, the adjusting end 501 of the compression member 5 has a certain gap between the adjusting end 501 and the end face of the steering slot 3, thereby providing an adjustable distance, and enabling adjustment of the angle of the spotlight 1 at any time during use. For adjustment, adjusting bolt is loosened so that there is a gap between the compression end and the steering slot 3, so that the pressure of the compression member 5 on the steering head 4 is reduced and the friction received by the steering head 4 is reduced. After the adjusting bolt is loosened, the steering head 4 can be moved to adjust the angle of rotation of the spotlight 1. When the desired angle of rotation is reached, the adjusting bolt is tightened so that the compression member 5 is pressed into the steering head 4 and fixed into place.

With continued reference to Figures 9 and 10, a preferred technical solution is that the fixed end 505 of the compression member 5 has an opening 506, which extends from the outer side of the compression member 5 towards the restriction hole 503 and is connected to the restriction hole 503. The two ends of the opening 506 are fixed to the spotlight 1. The openings 506 facilitate the attachment of the compression member 5 to the adjusting head 4.

With particular reference to Figure 10, a preferred technical solution is that the pressing member 5 is provided with an outer edge 504 surrounding the restriction hole 503 projecting from the surface of the pressing member 5 that is facing the projector light 1/floodlight 1. The inner diameter of the outer edge 504 is the same size as the outer diameter of the steering slot 3, and the inner wall of the outer edge 504 is provided around the outer wall of the steering slot 3.

In a preferred technical solution, the steering head 4 comprises a first arc surface and a second arc surface set opposite each other. The arcs of the first arc surface and the second arc surface match. The first arc surface and the second arc surface are connected by a number of first tendons. A number of first tendons are evenly spaced apart. A number of second tendons are also evenly spaced apart between the first arc surface and the second arc surface. The second tendons are crossed with the first tendons. The outer surfaces of the first tendons and the second tendons both have arcs matching the first arc surface and the second arc surface, together forming a complete ball shape.

In the preferred technical solution, the support base 2 of the floodlight comprises a mounting plate and a support arm, one end of which is fixedly connected to the mounting plate and the other end to the steering head 1.

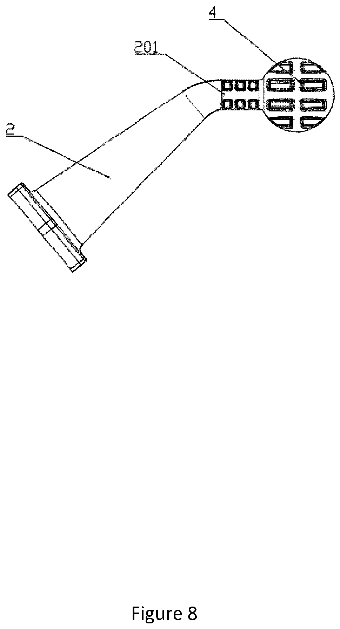

With particular reference to Figures 3 and 8, the support arm has a number of pits 201 at the connection with the steering head 4.

The following part of the description describes a mountable floodlight assembly that may or may not incorporate any combination of the features discussed above. In some cases, the features discussed above are referred to again but by using different terminology, in order to help understand the disclosure.

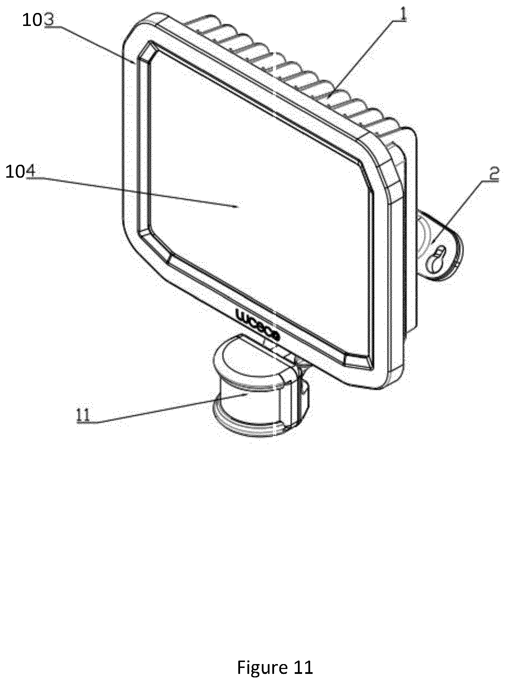

With reference to Figure 11, a mountable floodlight assembly comprises a floodlight 1 having a rear surface and a support base 2. The mountable floodlight assembly may additionally comprise any of a face cover 103, transparent window 104, and infrared sensor 11. As shown, the rear surface may form a heat sink for helping to dissipate heat from any lighting elements within the floodlight (not shown in Fig. 11). The heat sink may comprise a plurality of heat dissipation fins. The support base 2 may comprise an attachment point for mounting to a solid structure such as a wall of ceiling of a building.

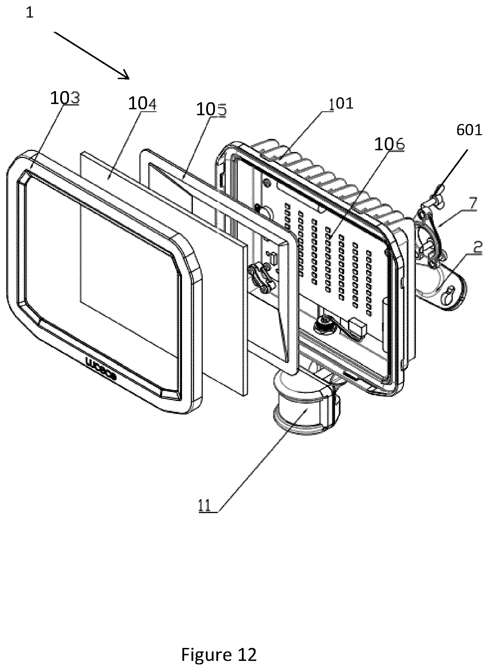

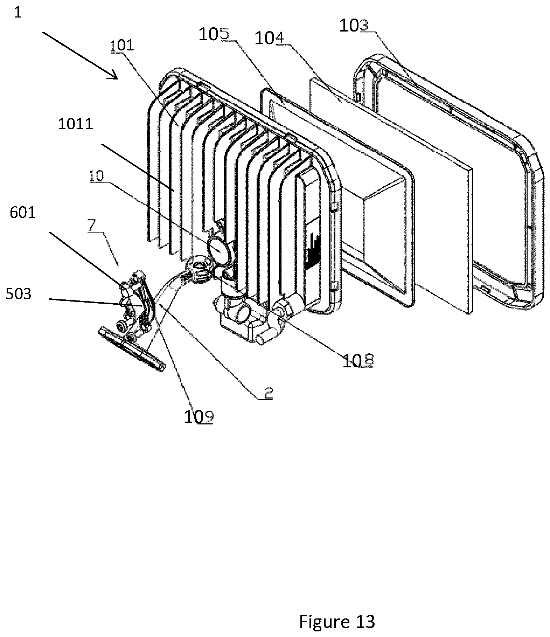

With reference to Figures 12 and 13, multiple components of the mountable floodlight assembly of Figure 11 are indicated. In order, from a forward to a rearward location, the mountable floodlight assembly may comprise the face cover 103, the transparent window 104, a reflector 105, an LED light source board assembly 106 (or non-LED light source board), housing 101 with rear surface 1011, a spherical adjustment head 8, and support base 2. The LED light source board 106 may emit light in a forward direction with respect to the housing 101, which is opposite to the direction faced by the rear surface 1011. The housing 101 typically contains one or more of the other components of the mountable floodlight assembly. The housing 101, including the components contained within the housing 101, may be referred to as a "floodlight". A hemispherical adjustment cavity 10 is located on a rear surface 1011 of the housing 101 and is configured to receive a first portion of the adjustment head 8. Typically, the adjustment cavity 10 is configured to snugly receive the first portion of the adjustment head 8. Due to the corresponding spherical "arc" shapes of the adjustment head 8 and adjustment cavity 10, the rear surface 1011 (and components located forward of the rear surface 1) can be rotated in three dimensions with respect to the support base 1. The adjustment head and adjustment cavity can be considered to provide a ball-joint connection between the light emitting portion of the assembly, i.e. the housing 1 and components forward of and/or enclosed in the housing 101, and the support base 2. Therefore, a user is able to adjust the housing 101 to direct light that is emitted by the LED light source board assembly 6 in a chosen direction. It is particularly advantageous that the rear surface 1011 can be rotated in three-dimensions about the ball-joint connection using a single degree of freedom of motion.

With further reference to Figures 12 and 13, a compression member 7 is configured to secure the first portion of the adjustment head 108 within the adjustment cavity 10. The compression member comprises a fixed end that is fixedly attached directly to the rear surface 1011 and an adjusting end attached to the rear surface 1011 of the floodlight body 101 at a separation distance to the rear surface 1011 via an adjustment bolt 601. The separation distance is variable by adjustment, typically rotation, of the adjustment bolt 601. The compression member 107 comprises a bell-mouth shaped hole 503 completely penetrating the compression member 7 and located in between the fixed and adjusting ends. The bell-mouth shaped hole 503 has an inner hole surface 510 (i.e. the wall bounding the space of the hole, see additionally Fig. 9) configured to contact (and also preferably conforms with) a second portion of the spherical adjustment head 108 that is not received within the hemispherical cavity 10. The adjustment bolt 601 is configurable to adjust the separation distance between a first distance, where the spherical adjustment head 108 is free to rotate within the hemispherical adjustment cavity 10 when the compression member is in a loosened configuration, and, a second distance lower that the first distance, where the inner hole surface 510 (see additionally Fig. 9) is frictionally pressed against the spherical adjustment head 108 to prevent rotation of the adjustment head 108 within the hemispherical adjustment cavity 10 when the compression member 7 is in a tightened configuration.

Preferably, the adjustment bolt 601 is a thumb screw that is advantageously rotatable by a user without requiring any specialist tools.

The diameter of the hole 503 in the compression member 7 typically has a "bell-mouth" profile reducing from the forward side of the compression member 7 closest to the housing 101, to the rear side of the compression member 109 that is away from the housing 101. Preferably the inner hole surface 510 of the hole 503 in the compression member 7 has an arc shape profile when viewed cross-sectionally in order to closely and/or snugly conform to the second portion of the adjustment head 8. Typically, the diameter of the hole 503 of the compression member 7 that is closest to the rear surface 1011 has a diameter corresponding to an outer diameter of the adjustment cavity 10.

With reference to Figure 9, a contact edge 600 of the hole 503 may be in the form of an arc when the compression member is in the loosened configuration. When the adjustment bold of the compression member 7 is tightened, causing pressing of the inner hole surface 510 on the spherical adjustment head 108, the compression member 7 may be configured to cause the contact edge 600 to deform into a parabola. This causes an increase in friction with the adjustment head 8 thereby improving the grip that is provided by contact between the adjustment head 8 and the compression member whilst reducing the torque required for tightening the adjustment bolt 108.

When a user wishes to adjust the direction in which light is emitted by the floodlight assembly, he merely needs to loosen the adjustment bolt so that the separation distance is at the first distance and the compression member 7 is in the loosened configuration. The user can then freely rotate the housing 101 in three dimensions, thereby precisely directing light that is emitted from the housing 101, e.g. by LED panel 106 at a desired target area to be illuminated. It is particularly advantageous that the user can undertake this adjustment using motion within a single degree of freedom. It is advantageously possible to mount the floodlight housing 101 such that in a default position the housing 101 is located on a directly opposite side of the spherical adjustment head with respect to the support base, and therefore the available movement angle of the housing 101 is maximised.

When the rear surface 1011 is in the correct position for illuminating the desired area, the adjustment bolt 601 can be tightened to reduce the separation distance and increasing friction between the first/ second portions of the adjustment head 8 and the hemispherical cavity 10/inner hole surface of the compression member 7. When the separation distance is reduced to the second distance, the rear surface 1011 is fixedly secured and further rotation is prevented. Furthermore, the adjustment bolt 601 can be adjusted so that the separation distance is in between the first and second distances, and therefore the location of the rear surface can be "fine tuned", since more effort is required from the user to overcome the resulting friction and rotate the housing 101, however the housing 101 only moves by small amounts and/or is not effected by gravity.

It is particularly advantageous for the angle of the housing 101, and hence light emitting components, to be adjusted in three dimensions in effectively only three motions - untightening the adjustment bolt, adjusting the rear surface 1011 with a single degree of freedom, and retightening the adjustment bolt. Each of these motions can be undertaken using a single hand, which is useful if a user is utilising his other hand to balance, for example on a ladder. Furthermore, due to the relatively large amount of contact area between the adjustment head 108 and surfaces of the cavity 10 and compression member 7, a relatively low amount of torque needs to be applied to tighten the adjustment bolt enough for there to be sufficient friction provided at the contact area for fixing the rear surface 1011 in position. Therefore, a user does not require tools such as an electric screwdriver for performing an adjustment.

The compression member 107 may include an opening 506 (see also Fig. 9) extending from an outer edge of the compression member to the bell-shaped hole. The opening enables the compression member to be easily attached when the adjustment head 8 is already seated within the cavity 10.

To provide additional frictional force for securing the rear surface 1, the compression member 7 may further comprise a wrap 502 as discussed above with respect to Figure 9.

In a preferred technical solution, floodlight assembly further includes an infrared sensor component 11 (see Figures 11 and 12), which can control the luminous intensity and lighting time of the projector lamp according to the intensity of the infrared rays sensed, which can effectively reduce the waste of electricity.

With continued reference to Figure 13, the housing 1 may comprise a plurality of heat dissipating fins for dissipating heat that is generated by components forward of the rear surface 1011, for example, any means for emitting light such as the LED panel 6. The adjusting cavity 10 may be formed by surfaces of the heat dissipating fins or within the fins. In some examples, the adjusting cavity may be formed within a protruding element from the rear surface 1, or, is formed by the heat sink itself. The adjusting cavity itself can therefore contribute to dissipating heat from the rear surface 1. Furthermore, optionally, the described mechanisms for mounting and adjusting the housing 1 are advantageously incorporated into a heat sink.

In a preferred technical solution, a number of heat dissipation fins are arranged on the back of the housing, and the heat dissipation fins are uniformly distributed in a stripe shape and longitudinally. A large amount of heat will be generated when the floodlight is illuminated. The accumulation of a large amount of heat in the housing will reduce the LED light source board assembly. Heat dissipation through radiating fins, helps to reduce the heat accumulated in the housing and improve service life.

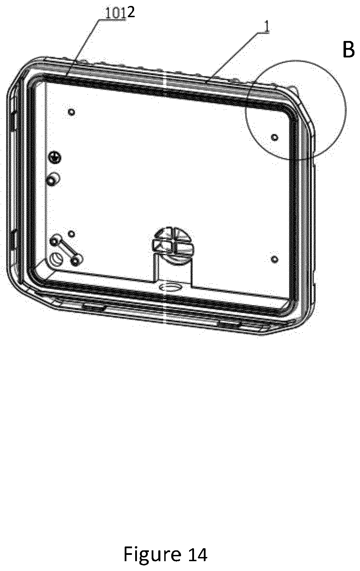

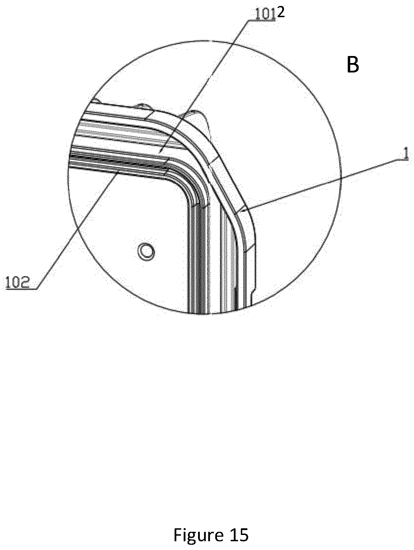

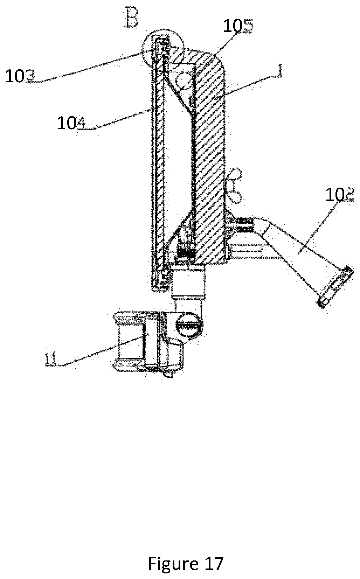

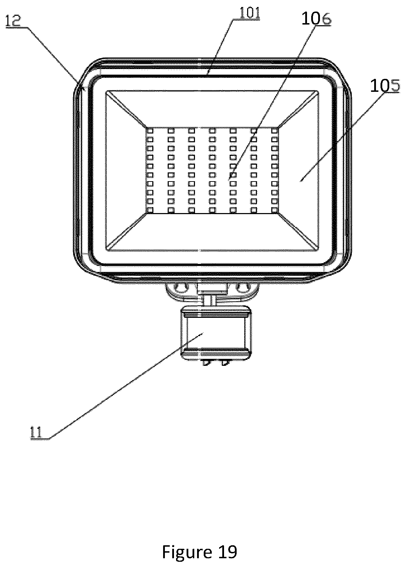

With reference to Figures 14, 15, 17, and 19, a glue groove 1012 may be located on an inner wall of the housing 1011 and is arranged around the housing 1011, the glue groove 1012 is located on an installation platform of the inner wall of the housing 1011, the opening of the glue groove 1012 is arranged upward, and the glue groove 1012 is located on the supporting rib 102 and the glue between the inner walls of the groove 1012, the height of the side wall of the glue groove 1012 is not higher than the height of the upper end of the reflector cup 5. The glue groove 1012 is filled with glass glue 12, and the circumference of a pane of glass 104 is pressed on the glass glue 12 to fix the glass 104. The glass 104 is pressed on the reflector 105, and the reflector 105 is pressed and fixed.

In a preferred technical solution, a number of tiny prism structures are provided on the glass plate 104, which play a role of diffuse reflection, can make the light output uniform, and make the light-emitting surface without bright spots or dark areas.

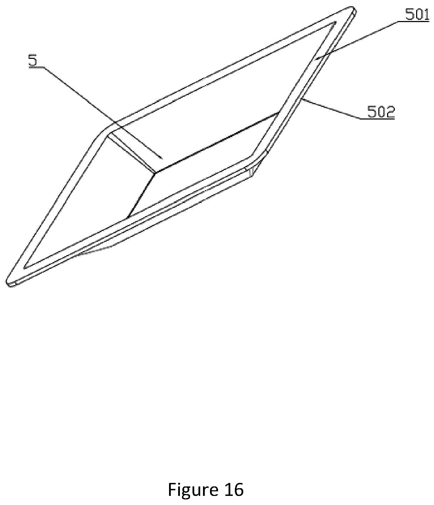

With reference to Figure 16, a reflector 105 may be used with any of the assemblies discussed above. The reflector 105 comprises a reflector cup 501 and a reflector edge 502.

In the description of the utility model, it is understood that the terms "top", "bottom", "top", "bottom", "inside", "outside", etc. indicate the orientation or position relationship based on the orientation or position relationship shown in the attached drawings, or the orientation or position relationship in which the device of the present disclosure is customarily placed in use, or the orientation or position relationship as commonly understood by those skilled in the art, only to facilitate and simplify the description of the present disclosure, and not to indicate or imply that the equipment or components referred to must have a particular orientation, be constructed and operated in a particular orientation, and therefore cannot be construed as limiting the present disclosure.

Furthermore, the terms "first" and "second" are used for descriptive purposes only and are not to be understood as indicating or implying relative importance or implicitly specifying the number of technical features indicated. Thus, a feature qualified with "first" and "second" may explicitly or implicitly include one or more of these features. For the purpose of the description of the present disclosure, "plurality" means two or more, unless otherwise expressly and specifically limited.

The term "forward" typically refers to the direction of light emitted from a floodlight and the term "rear" or "rearwards" refer to the opposite direction to the forward direction.

## Claims

1. A mountable floodlight assembly comprising:
a floodlight (1) and a support structure for supporting the floodlight (1);
wherein the support structure comprises a spherical adjustment head (4) fixed to a support base (2) , the support base (2) comprising a mounting plate and a support arm, one end of the support arm being fixedly connected to the mounting plate and the other end being fixedly connected to the spherical adjustment head (4), and, a compression member (5, 7);
wherein a hemispherical adjustment cavity (10) is embedded in a rear surface of the floodlight (1), the hemispherical adjustment cavity (10) configured to conform with and receive a first portion of the spherical adjustment head (4) of the support structure;
wherein the compression member (5, 7) secures the first portion of the spherical adjustment head (4) within the hemispherical adjustment cavity (10), the compression member (5, 7) comprising a fixed end (505) fixedly attached directly to the rear surface of the floodlight (1) and an adjusting end (501), opposite to the fixed end (505), attached to the rear surface of the floodlight (1) at a separation distance to the rear surface via a single adjustment bolt (601), the separation distance being variable by rotation of the adjustment bolt (601),
wherein the compression member (5, 7) further comprises a bell-mouth shaped hole (503) completely penetrating the compression member (5, 7) and located in between the fixed and adjusting ends (505, 501), the bell-mouth shaped hole (503) having an inner hole surface configured to contact a second portion of the spherical adjustment head (108) that is not received within the hemispherical adjustment cavity (10), the compression member (5, 7) further defining an opening (506) extending from an outer edge of the compression member (5, 7) at the fixed end (505) to the bell-mouth shaped hole, and the fixed end (505) being fixedly attached to the rear surface of the floodlight (1) at the two ends of the opening, wherein the adjustment bolt (601) is positioned opposite to the fixed end (505) and is centrally located with respect to the two ends of the opening (506); and
wherein the adjustment bolt (601) is configurable to adjust the separation distance between a first distance, where the spherical adjustment head (108) is free to rotate in three dimensions within the hemispherical adjustment cavity (10) when the compression member (5, 7) is in a loosened configuration, and, a second distance lower than the first distance, where the inner hole surface is frictionally pressed against the second portion of the spherical adjustment head (108) to prevent rotation of the adjustment head (108) within the hemispherical adjustment cavity (10) when the compression member (5, 7) is in a tightened configuration.

2. A mountable floodlight assembly according to claim 1 wherein the bell-shaped hole (503) comprises a forward diameter on a forward side of the compression member (5, 7) facing the rear surface of the floodlight (1), and a rearward diameter on an opposing rear side of the compression member (5, 7), wherein the forward diameter corresponds to an outer edge of the hemispherical adjustment cavity (10) on the rear surface of the floodlight (1), and, wherein the rearward diameter is less than the forward diameter.

3. A mountable floodlight assembly according to claim 2 wherein a contact edge of the bell-shaped hole (503) contacting the second portion of the spherical adjustment head (108) is in the form of an arc when the compression member (5, 7) is in the loosened configuration, and, when the compression is in the tightened configuration, the contact edge of the bell-shaped hole (503) is deformed to be in the form of a parabola.

4. A mountable floodlight assembly according to any of claims 1 to 3 wherein the compression member (5, 7) further comprises a wrap placed around at least a portion of the circumference around the bell-shaped hole (503), the wrap located on, and extending rearward from, a rear surface of the compression member (5, 7) facing away from the rear surface of the floodlight (1), wherein the wrap comprises an inner wall conforming to a third portion of the spherical adjustment head (108) projecting rearward of the bell-shaped hole (503) and providing additional frictional contact between the spherical adjustment head (108) and the compression member (5, 7) when the compression element is in the tightened configuration.

5. A mountable floodlight assembly according to any of claims 1 to 4 wherein the rear surface of the floodlight (1) comprises a heat sink structure, the heat sink structure comprising a plurality of heat dissipation fins, and, wherein the heat sink structure further comprises a protrusion within which the hemispherical adjustment cavity (10) is formed.

6. A method for adjusting a mountable floodlight assembly according to claim 1 comprising the steps of rotating the adjustment bolt (601) to increase the separation distance to the second distance, rotating the floodlight (1) about the spherical adjustment head (108) in three dimensions, rotating the adjustment bolt (601) to decrease the separation distance to the first distance thereby fixing the floodlight (1) in a directional position.

## Patentansprüche

1. Montierbare Flutlichtanordnung, Folgendes umfassend:
ein Flutlicht (1) und eine Stützstruktur zum Stützen des Flutlichts (1);
wobei die Stützstruktur einen kugelförmigen Einstellkopf (4), der an einer Stützbasis (2) befestigt ist, wobei die Stützbasis (2) eine Montageplatte und einen Stützarm umfasst, wobei ein Ende des Stützarms fest mit der Montageplatte verbunden ist und das andere Ende fest mit dem kugelförmigen Einstellkopf (4) verbunden ist, und ein Kompressionselement (5, 7) umfasst;
wobei ein halbkugelförmiger Einstellhohlraum (10) in einer Rückfläche des Flutlichts (1) eingebaut ist, wobei der halbkugelförmige Einstellhohlraum (10) konfiguriert ist, um der Form des ersten Teils des kugelförmigen Einstellkopfs (4) der Stützstruktur zu entsprechen und diesen zu empfangen;
wobei das Kompressionselement (5, 7) den ersten Teil des kugelförmigen Einstellkopfs (4) innerhalb des halbkugelförmigen Einstellhohlraums (10) sichert, wobei das Kompressionselement (5, 7) ein direkt an der Rückfläche des Flutlichts (1) fest angebrachtes festes Ende (505) und ein dem festen Ende (505) gegenüberliegendes einstellbares Ende (501) umfasst, das an der Rückfläche des Flutlichts (1) in einem Trennungsabstand zu der Rückfläche mittels einer einzelnen Einstellschraube (601) angebracht ist, wobei der Trennungsabstand durch Drehung der Einstellschraube (601) veränderbar ist,
wobei das Kompressionselement (5, 7) ferner ein glockenmundförmiges Loch (503) umfasst, das vollständig in das Kompressionselement (5, 7) eindringt und sich zwischen den festen und dem einstellbaren Ende (505, 501) befindet, wobei das glockenmundförmige Loch (503) eine innere Lochfläche aufweist, die konfiguriert ist, um einen zweiten Teil des kugelförmigen Einstellkopfs (108), der nicht innerhalb des halbkugelförmigen Einstellhohlraums (10) empfangen wird, zu kontaktieren, wobei das Kompressionselement (5, 7) ferner eine Öffnung (506) definiert, die sich von einer Außenkante des Kompressionselements (5, 7) am festen Ende (505) zu dem glockenmundförmigen Loch erstreckt, und wobei das feste Ende (505) fest an der Rückfläche des Flutlichts (1) an den beiden Enden der Öffnung angebracht ist, wobei die Einstellschraube (601) gegenüber dem festen Ende (505) positioniert ist und sich bezüglich den zwei Enden der Öffnung (506) zentral befindet; und
wobei die Einstellschraube (601) konfigurierbar ist, um den Trennungsabstand zwischen einem ersten Abstand, in dem sich der kugelförmige Einstellkopf (108) innerhalb des halbkugelförmigen Einstellhohlraums (10) in drei Dimensionen frei drehen kann, wenn das Kompressionselement (5, 7) in einer gelösten Konfiguration ist, und einem zweiten Abstand einzustellen, der kleiner ist als der erste Abstand, wobei in dem zweiten Abstand die innere Lochfläche reibschlüssig gegen den zweiten Teil des kugelförmigen Einstellkopfs (108) gedrückt wird, um eine Drehung des Einstellkopfs (108) innerhalb des halbkugelförmigen Einstellhohlraums (10) zu verhindern, wenn das Kompressionselement (5, 7) in einer festgezogenen Konfiguration ist.

2. Montierbare Flutlichtanordnung nach Anspruch 1, wobei das glockenförmige Loch (503) einen Vorderdurchmesser auf einer Vorderseite des Kompressionselements (5, 7), die der Rückfläche des Flutlichts (1) gegenüberliegt, und einen Rückdurchmesser auf einer gegenüberliegenden Rückseite des Kompressionselements (5, 7) umfasst, wobei der Vorderdurchmesser einer Außenkante des halbkugelförmigen Einstellhohlraums (10) auf der Rückfläche des Flutlichts (1) entspricht, und wobei der Rückdurchmesser kleiner ist als der Vorderdurchmesser.

3. Montierbare Flutlichtanordnung nach Anspruch 2, wobei eine Kontaktkante des glockenförmigen Lochs (503), die den zweiten Teil des kugelförmigen Einstellkopfs (108) kontaktiert, in der Form eines Bogens ist, wenn das Kompressionselement (5, 7) in der gelösten Konfiguration ist, und wobei, wenn die Kompression in der festgezogenen Konfiguration ist, die Kontaktkante des glockenförmigen Lochs (503) deformiert ist, um die Form einer Parabel anzunehmen.

4. Montierbare Flutlichtanordnung nach einem der Ansprüche 1 bis 3, wobei das Kompressionselement (5, 7) ferner eine Umwicklung, die mindestens um einen Teil des Umfangs um das glockenförmige Loch (503) herum platziert ist, umfasst, wobei die Umwicklung sich auf einer von der Rückfläche des Flutlichts (1) abgewandten Rückfläche des Kompressionselements (5, 7) befindet und sich nach hinten von dieser erstreckt, wobei die Umwicklung eine Innenwand umfasst, die einem dritten Teil des kugelförmigen Einstellkopfs (108) entspricht, der nach hinten von dem glockenförmigen Loch (503) übersteht und zusätzlichen Reibkontakt zwischen dem kugelförmigen Einstellkopf (108) und dem Kompressionselement (5, 7) bereitstellt, wenn das Kompressionselement in der festgezogenen Konfiguration ist.

5. Montierbare Flutlichtanordnung nach einem der Ansprüche 1 bis 4, wobei die Rückfläche des Flutlichts (1) eine Wärmesenkestruktur umfasst, wobei die Wärmesenkestruktur eine Mehrzahl von Wärmeableitrippen umfasst, und wobei die Wärmesenkestruktur ferner einen Vorsprung umfasst, innerhalb dessen der halbkugelförmige Einstellhohlraum (10) gebildet ist.

6. Verfahren zum Einstellen einer montierbaren Flutlichtanordnung nach Anspruch 1, umfassend die Schritte des Drehens der Einstellschraube (601), um den Trennungsabstand zu dem zweiten Abstand zu erhöhen, des Drehens des Flutlichts (1) um den kugelförmigen Einstellkopf (108) in drei Dimensionen, des Drehens der Einstellschraube (601), um den Trennungsabstand zu dem ersten Abstand zu verringern, wodurch das Flutlicht (1) in einer Richtungsposition fixiert wird.

## Revendications

1. Ensemble projecteur montable comprenant :
un projecteur (1) et une structure de support pour supporter le projecteur (1) ;
dans lequel la structure de support comprend une tête d'ajustement sphérique (4) fixée à une base de support (2), la base de support (2) comprenant une plaque de montage et un bras de support, une extrémité du bras de support étant connectée de manière fixe à la plaque de montage et l'autre extrémité étant connectée de manière fixe à la tête d'ajustement sphérique (4),
et un élément de compression (5, 7) ;
dans lequel une cavité d'ajustement hémisphérique (10) est intégrée dans une surface arrière du projecteur (1), la cavité d'ajustement hémisphérique (10) étant configurée pour se conformer à et recevoir une première partie de la tête d'ajustement sphérique (4) de la structure de support ;
dans lequel l'élément de compression (5, 7) fixe la première partie de la tête d'ajustement sphérique (4) dans la cavité d'ajustement hémisphérique (10), l'élément de compression (5, 7) comprenant une extrémité fixe (505) attachée de manière fixe directement à la surface arrière du projecteur (1) et une extrémité d'ajustement (501), opposée à l'extrémité fixe (505), fixée à la surface arrière du projecteur (1) à une distance de séparation de la surface arrière par le biais d'un unique boulon de réglage (601), la distance de séparation étant variable du fait de la rotation du boulon de réglage (601) ;
dans lequel l'élément de compression (5, 7) comprend en outre un trou évasé (503) pénétrant totalement l'élément de compression (5, 7) et situé entre les extrémités fixe et d'ajustement (505, 501), le trou évasé (503) présentant une surface de trou interne configurée pour entrer en contact avec une deuxième partie de la tête d'ajustement hémisphérique (108) qui n'est pas reçue dans la cavité d'ajustement hémisphérique (10), l'élément de compression (5, 7) définissant en outre une ouverture (506) s'étendant depuis un bord extérieur de l'élément de compression (5, 7) à l'extrémité fixe (505) à l'orifice évasé, et l'extrémité fixe (505) étant attachée de manière fixe à la surface arrière du projecteur (1) aux deux extrémités de l'ouverture, dans lequel le boulon de réglage (601) est positionné à l'opposé de l'extrémité fixe (505) et est situé au centre par rapport aux deux extrémités de l'ouverture (506) ; et
dans lequel le boulon de réglage (601) est configurable pour ajuster la distance de séparation entre une première distance, dans laquelle la tête d'ajustement sphérique (108) est libre de tourner en trois dimensions dans la cavité d'ajustement hémisphérique (10) quand l'élément de compression (5, 7) est dans une configuration relâchée et, une seconde distance inférieure à la première distance, où la surface de trou intérieure est comprimée en frottement contre la deuxième partie de la tête d'ajustement sphérique (108) afin de prévenir la rotation de la tête d'ajustement (108) dans la cavité d'ajustement hémisphérique (10) quand l'élément de compression (5, 7) est dans une configuration serrée.

2. Ensemble projecteur montable selon la revendication 1, dans lequel le trou évasé (503) comprend un diamètre avant sur un côté avant de l'élément de compression (5, 7) faisant face à la surface arrière du projecteur (1), et un diamètre arrière sur un côté arrière opposé de l'élément de compression (5, 7), dans lequel le diamètre avant correspond à un bord extérieur de la cavité d'ajustement hémisphérique (10) sur la surface arrière du projecteur (1), et, dans lequel le diamètre arrière est inférieur au diamètre avant.

3. Ensemble projecteur montable selon la revendication 2, dans lequel un bord de contact du trou évasé (503) en contact avec la deuxième partie de la tête d'ajustement sphérique (108) est sous la forme d'un arc lorsque l'élément de compression (5, 7) est dans la configuration relâchée et, lorsque l'élément de compression est dans la configuration serrée, le bord de contact du trou évasé (503) est déformé pour être en forme de parabole.

4. Ensemble projecteur montable selon l'une quelconque des revendications 1 à 3, dans lequel l'élément de compression (5, 7) comprend en outre une enveloppe placée autour d'au moins une partie de la circonférence autour du trou évasé (503), l'enveloppe étant située sur, et s'étendant vers l'arrière depuis, une surface arrière de l'élément de compression (5, 7) orientée à l'opposé de la surface arrière du projecteur (1), dans lequel l'enveloppe comprend une paroi interne prenant la forme d'une troisième partie de la tête d'ajustement sphérique (108) se projetant vers l'arrière du trou évasé (503) et fournissant un contact par frottement supplémentaire entre la tête d'ajustement sphérique (108) et l'élément de compression (5, 7) quand l'élément de compression est dans la configuration serrée.

5. Ensemble projecteur montable selon l'une quelconque des revendications 1 à 4, dans lequel la surface arrière du projecteur (1) comprend une structure de dissipateur thermique, la structure de dissipateur thermique comprenant une pluralité d'ailettes de dissipation de chaleur, et dans lequel la structure de dissipateur thermique comprend en outre une saillie, dans laquelle la cavité d'ajustement hémisphérique (10) est formée.

6. Procédé pour ajuster un ensemble projecteur montable selon la revendication **1,** comprenant les étapes consistant à faire tourner le boulon de réglage (601) pour augmenter la distance de séparation à la seconde distance, faire tourner le projecteur (1) autour de la tête d'ajustement sphérique (108) dans trois dimensions, faire tourner le boulon de réglage (601) pour diminuer la distance de séparation à la première distance en fixant ainsi le projecteur (1) dans une position directionnelle.
